(19) Europäisches Patentamt
European Patent Office
Office européen des brevets

(11) **EP 4 513 591 A1**

(12) **EUROPEAN PATENT APPLICATION**
published in accordance with Art. 153(4) EPC

(43) Date of publication:
**26.02.2025 Bulletin 2025/09**

(21) Application number: 23903718.7

(22) Date of filing: **20.10.2023**

(51) International Patent Classification (IPC):
*H01M 4/36* (2006.01)     *H01M 4/48* (2010.01)
*H01M 4/134* (2010.01)     *H01M 10/052* (2010.01)
*C01B 33/113* (2006.01)     *H01M 4/02* (2006.01)

(52) Cooperative Patent Classification (CPC):
**C01B 33/113; H01M 4/02; H01M 4/134; H01M 4/36;
H01M 4/48; H01M 10/052;** Y02E 60/10

(86) International application number:
**PCT/KR2023/016304**

(87) International publication number:
**WO 2024/128514 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 KR 20220172768**

(71) Applicant: **LG Energy Solution, Ltd.
Seoul 07335 (KR)**

(72) Inventors:
• **PARK, Heeyeon
Daejeon 34122 (KR)**
• **CHOI, Junghyun
Daejeon 34122 (KR)**
• **SHIN, Sun Young
Daejeon 34122 (KR)**
• **LEE, Yong Ju
Daejeon 34122 (KR)**

(74) Representative: **Hoffmann Eitle
Patent- und Rechtsanwälte PartmbB
Arabellastraße 30
81925 München (DE)**

(54) **ANODE ACTIVE MATERIAL, ANODE INCLUDING SAME, SECONDARY BATTERY INCLUDING SAME ANODE, AND METHOD FOR MANUFACTURING ANODE ACTIVE MATERIAL**

(57)     The present invention relates to an anode active material comprising silicon-based particles and a coating layer formed on at least part of the silicon-based particles, wherein the silicon-based particle includes $SiO_x$ (0<x<2) and Li compounds and have a carbon layer formed on at least part of the surface thereof, and the coating layer includes an amphiphilic polymer.

EP 4 513 591 A1

**Description**

[Technical Field]

The present invention relates to a negative electrode active material, a negative electrode including the same, a secondary battery including the negative electrode, and a method for manufacturing a negative electrode active material.
The present application claims priority to and the benefit of Korean Patent Application No. 10-2022-0172768 filed in the Korean Intellectual Property Office on December 12, 2022, the entire contents of which are incorporated herein by reference.

[Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.
In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.
Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.
On the other hand, among the silicon-based active materials, a silicon-based oxide, specifically, a silicon-based oxide represented by $SiO_x$ (0<x<2) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.
In this regard, studies have been conducted to reduce the irreversible capacity and to improve the initial efficiency by doping or intercalating metals such as Li, Al, and Mg into silicon-based oxides. However, a negative electrode slurry including a metal-doped silicon-based oxide as a negative electrode active material has problems in that the metal oxide formed by doping metal reacts with moisture to increase pH of the negative electrode slurry and to change the viscosity and the negative electrode active material agglomerates in the slurry to lower the dispersibility. Accordingly, the state of the manufactured negative electrode is poor and the charging and discharging efficiency of the negative electrode is lowered.
Accordingly, there is a need to develop a negative electrode active material capable of improving phase stability of a negative electrode slurry including a silicon-based oxide and improving charging and discharging efficiency of a negative electrode manufactured from the slurry.

Citation List

Patent Literature

Patent Literature 1: Korean Patent No. 10-0794192

[Detailed Description of the Invention]

[Technical Problem]

The present invention relates to a negative electrode active material, a negative electrode including the same, a secondary battery including the negative electrode, and a method for manufacturing a negative electrode active material.

[Technical Solution]

An exemplary embodiment of the present invention provides a negative electrode active material including a silicon-based particle including $SiO_x$ (0<x<2) and a Li compound and having a carbon layer provided on at least a portion of a surface thereof; and an amphiphilic polymer-containing coating layer provided on at least a portion on the silicon-based particle.

Another exemplary embodiment of the present invention provides a negative electrode including the negative electrode active material.

Still another exemplary embodiment of the present invention provides a secondary battery including the negative electrode.

An exemplary embodiment of the present invention provides a method for manufacturing a negative electrode active material, the method including: forming a silicon-based particle including SiOx (0<x<2) and a Li compound and having a carbon layer provided on at least a portion of a surface thereof; and reacting the silicon-based particle with an amphiphilic polymer precursor.

[Advantageous Effects]

The negative electrode active material according to an exemplary embodiment of the present invention includes the coating layer containing the amphiphilic polymer provided on the outermost surface of the silicon-based particle including a Li compound, and thus has an effect of improving the aqueous processability of the slurry. Specifically, since the amphiphilic polymer includes a hydrophilic group and a hydrophobic group, the amphiphilic polymer lowers reactivity between the active material and water due to the hydrophobic group to prevent moisture from penetrating into the negative electrode active material from the aqueous slurry, thereby efficiently passivating the silicon-based particles. In addition, since a side reaction between the silicon-based particle or a lithium by-product and water is prevented to suppress gas generation, there is an effect of improving the aqueous processability of the slurry.

At the same time, there is an effect of improving the dispersibility of the negative electrode active material in the aqueous slurry due to the hydrophilic group included in the amphiphilic polymer.

Accordingly, the negative electrode including the negative electrode active material according to an exemplary embodiment of the present invention, and the secondary battery including the negative electrode have effects of improving the discharge capacity, initial efficiency, resistance performance and/or life characteristics of the battery.

[Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endeavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter ($D_{50}$) may be defined as a particle diameter corresponding to 50% of the cumulative volume in the particle size distribution curve of the particles (graph curve of the particle size distribution). The average particle diameter ($D_{50}$) may be measured using, for example, a laser diffraction method. In the laser diffraction method, in general, particle diameters ranging from a submicron region to several millimeters can be measured, and results with high reproducibility and high resolvability can be obtained.

Hereinafter, preferred embodiments of the present invention will be described in detail. However, it should be understood that the embodiments of the present invention may be modified in various forms and the scope of the present invention is not limited to the embodiments described below.

**<Negative Electrode Active Material>**

An exemplary embodiment of the present invention provides a negative electrode active material including a silicon-based particle including $SiO_x(0<x<2)$ and a Li compound and having a carbon layer provided on at least a portion of a surface thereof; and an amphiphilic polymer-containing coating layer provided on at least a portion on the silicon-based particle.

The negative electrode active material according to an exemplary embodiment of the present invention includes a silicon-based particle. The silicon-based particle includes $SiO_x(0<x<2)$ and a Li compound.

The $SiO_x$ $(0<x<2)$ may correspond to a matrix in the silicon-based particle. The $SiO_x(0<x<2)$ may be a form of including Si and/or $SiO_2$, and the Si may form a phase. That is, x corresponds to a ratio of the number of O to Si included in the $SiO_x(0<x<2)$. When the silicon-based particle includes the $SiO_x(0<x<2)$, a discharge capacity of a secondary battery can be improved.

The Li compound may correspond to a matrix in the silicon-based particle. The Li compound may exist in a form of at least one of a lithium atom, lithium silicate, lithium silicide or a lithium oxide in the silicon-based particle. When the silicon-based particle includes a Li compound, the initial efficiency is improved.

The Li compound may be distributed on the surface and/or in the inside of the silicon-based particle in the form of being doped to the silicon-based particle. The Li compound may be distributed on the surface and/or in the inside of the silicon-based particle to serve to control volume expansion/contraction of the silicon-based particle to an appropriate level and to prevent damage to the active material. In addition, the Li compound may be contained, in terms of lowering a ratio of an irreversible phase (for example, $SiO_2$) of silicon-based oxide particle to increase the efficiency of the active material.

In an exemplary embodiment of the present invention, the Li compound may be present in a form of lithium silicate. The lithium silicate is represented by $Li_aSi_bO_c(2\leq a\leq 4, 0<b\leq 2, 2\leq c\leq 5)$ and may be divided into crystalline lithium silicate and amorphous lithium silicate. The crystalline lithium silicate may be present in the silicon-based particles in a form of at least one lithium silicate selected from the group consisting of $Li_2SiO_3$, $Li_4SiO_4$ and $Li_2Si_2O_5$, and the amorphous lithium silicate may have a complex form of $Li_aSi_bO_c(2\leq a\leq 4, 0<b\leq 2, 2\leq c\leq 5)$. However, the present invention is not limited thereto.

In an exemplary embodiment of the present invention, Li may be included in an amount of 0.1 part by weight to 40 parts by weight, or 0.1 part by weight to 25 parts by weight, on the basis of 100 parts by weight of the total of the negative electrode active material. Specifically, Li may be included in an amount of 1 part by weight to 25 parts by weight, and more specifically, 2 parts by weight to 20 parts by weight. As the Li content increases, the initial efficiency increases, but the discharge capacity decreases. Therefore, when the above range is satisfied, appropriate discharge capacity and initial efficiency can be implemented.

The content of the Li element can be confirmed through ICP analysis. Specifically, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the prepared negative electrode active material can be analyzed.

In an exemplary embodiment of the present invention, the silicon-based particle may include a further metal atom. The metal atom may be present in the form of at least one of a metal atom, a metal silicate, a metal silicide and a metal oxide in the silicon-based particle. The metal atom may include at least one selected from the group consisting of Mg, Li, Al and Ca. Accordingly, initial efficiency of the negative electrode active material may be improved.

In an exemplary embodiment of the present invention, the silicon-based particle is provided with a carbon layer on at least a portion of a surface thereof. In this case, the carbon layer may be coated on at least a portion of the surface, i.e., may be coated partially on the surface of the particle, or may be coated on the entire surface of the particle. Conductivity is imparted to the negative electrode active material by the carbon layer, so that the initial efficiency, life characteristics, and battery capacity characteristics of a secondary battery can be improved.

In an exemplary embodiment of the present invention, the carbon layer includes amorphous carbon.

Further, the carbon layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or may be a carbon-based material formed by using a hydrocarbon as a source of chemical vapor deposition.

The carbide of the other organic materials may be a carbide of an organic substance selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 part by weight to 50 parts by weight, 0.1 part by weight to 30 parts by weight, or 0.1 part by weight to 20 parts by weight on the basis of 100 parts by weight of the total of the negative electrode active material. More specifically, the carbon layer may be included in an amount of 0.5 part by weight to 15 parts by weight, 1 part by weight to 10 parts by weight, or 1 part by weight to 5 parts by weight. When the above range is satisfied, reduction in capacity and efficiency of the negative electrode active material can be prevented.

In an exemplary embodiment of the present invention, a thickness of the carbon layer may be 1 nm to 500 nm, and specifically 5 nm to 300 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

In an exemplary embodiment of the present invention, an amphiphilic polymer-containing coating layer is provided on at least a portion on the silicon-based particle.

The amphiphilic polymer is a material having both hydrophilic and hydrophobic groups. The amphiphilic polymer may include one or more selected from the group consisting of polyethylene glycol-polypropylene oxide (PEG-PPO), polyethylene glycol-polystyrene (PEG-PS), polystyrene-poly(butyl acrylate) (PS-PBA), polylysine-polypropylene oxide (Polylysine-PPO), and polylysine-polystyrene (Polylysine-PS), and preferably may include

PEG-PS.

Specifically, during the manufacture of a negative electrode active material, a silicon-based particle having a carbon layer provided on at least a portion of a surface thereof is formed, Li is doped, and then an amphiphilic polymer is coated to introduce an amphiphilic polymer-containing coating layer onto at least a portion on the silicon-based particle.

A weight average molecular weight of the amphiphilic polymer may be 100 g/mol to 50,000 g/mol, and specifically 1,000 g/mol to 30,000 g/mol or 5,000 g/mol to 20,000 g/mol.

In the present invention, the weight average molecular weight (Mw) of the amphiphilic polymer may be measured by gel permeation chromatography (GPC) using a polystyrene (PS) standard using the Agilent 1200 series. Specifically, the weight average molecular weight may be measured using an Agilent 1200 series device using a Polymer Laboratories PLgel MIX-B 300 mm length column. In this case, the measurement temperature is 40°C, the used solvent is tetrahydrofuran (THF), and the flow rate is 1 mL/min. Each sample is prepared at a concentration of 10 mg/10 mL, and then supplied in an amount of 10 μL, and the weight average molecular weight (Mw) value is derived using a calibration curve formed using a polystyrene standard. In this case, nine types of polystyrene standard products with molecular weights (g/mol) of 2,000/10,000/30,000/70,000/200,000/700,000/2,000,000/4,000, 000/10,000,000 are used.

The amphiphilic polymer may include a unit including a hydrophilic group and a unit including a hydrophobic group.

The unit including the hydrophilic group may be a unit derived from polyethylene glycol (PEG), polylysine, poly [oligo(ethylene glycol)methyl ether methacrylate] (POEGMA), polyvinyl alcohol (PVA), polyglutamic acid (PGA), polyvinylpyrrolidone (PVP), polyacrylamide (PAM), or the like. Without being limited thereto, units including hydrophilic groups known in the art may be appropriately adopted for the amphiphilic polymer.

The unit including the hydrophilic group may be arranged close to the outermost surface of the negative electrode active material. By introducing the hydrophilic group into the negative electrode active material, agglomeration between negative electrode active materials in the aqueous slurry can be effectively suppressed to improve dispersibility.

The unit including the hydrophilic group may be included in an amount of 20 parts by weight to 80 parts by weight, specifically 30 parts by weight to 70 parts by weight or 40 parts by weight to 60 parts by weight on the basis of a total of 100 parts by weight of the amphiphilic polymer. When the above range is satisfied, there is an effect of improving dispersibility in the slurry, and when the above range is not satisfied, there is a problem of agglomeration among particles in the slurry.

The unit including the hydrophobic group may be a unit derived from polystyrene (PS), polypropylene oxide (PPO), polylactic acid (PLA), polysebacic acid (PSA), polylactic-co-glycolic acid (PLGA), polyaspartic acid (PASP), or the like. Without being limited thereto, units including hydrophobic groups known in the art may be appropriately adopted for the amphiphilic polymer. By introducing the hydrophobic group into the negative electrode active material, the reactivity between the negative electrode active material and water is lowered to prevent moisture from penetrating into the negative electrode active material from the aqueous slurry, and a side reaction between the silicon-based particle or lithium by-product and water is prevented to suppress gas generation, there is an effect of improving aqueous processability of the slurry.

The unit including the hydrophobic group may be included in an amount of 20 parts by weight to 80 parts by weight, specifically 30 parts by weight to 70 parts by weight or 40 parts by weight to 60 parts by weight on the basis of a total of 100 parts by weight of the amphiphilic polymer. When the above range is satisfied, there is an effect of preventing moisture from reacting with the active material, and when the above range is not satisfied, there is a problem in that moisture penetrates into the active material to lower processability.

That is, the surface of the negative electrode active material is coated with the amphiphilic polymer including both hydrophilic and hydrophobic groups, so that the hydrophobic group that increases the water resistance of the negative electrode active material and the hydrophilic group that increases dispersibility are simultaneously introduced, leading to an effective improvement of the aqueous processability of the slurry.

A weight ratio of the unit including the hydrophilic group and the unit including the hydrophobic group may be 20:80 to 80:20, and specifically 30:70 to 70:30 or 40:60 to 60:40. When the above range is satisfied, the dispersibility in the slurry is excellent and there is an effect of preventing moisture from penetrating into the particles. When the above range is not satisfied, the dispersibility in the slurry deteriorates, causing problems that agglomeration occurs among particles or moisture penetrates into the particles to cause a reaction.

The negative electrode active material according to an exemplary embodiment of the present invention may have a dispersibility of 70% or higher according to Equation 1 below, when a mixture of 20 g of the negative electrode active material and 80 g of distilled water is sonicated and is then passed through a mesh having a diameter of a size corresponding to $D_{max}$ of the negative electrode active material.

$$[\text{Equation 1}]$$

$$\text{dispersibility(\%)} = \frac{Wt - Wr}{Wt} \times 100$$

In Equation 1 above, $W_t$ refers to a total weight of the negative electrode active material included in the mixture, and $W_r$ refers to a weight of the negative electrode active material that did not pass through the mesh when the mixture has been passed through the mesh.

The dispersibility according to Equation 1 may be 70% or higher, 73% or higher, 75% or higher, 80% or higher, 85% or higher, or 88% or higher, and 100% or less.

Specifically, the sonication may be performed for 1 to 10 minutes, and preferably 5 minutes.

The dispersibility may be measured after sonicating the mixture and allowing it to stand for 10 minutes before passing the mixture through a mesh.

The mesh may be one having a diameter of a size corresponding to $D_{max}$ of the negative electrode active material, and the dispersibility may be measured by appropriately adopting a mesh of a material commonly used in the present technical field.

In general, when mixing a negative electrode active material with distilled water, agglomeration of the negative electrode active material occurs, and the agglomerated negative electrode active material cannot pass through the mesh, resulting in poor dispersibility. However, since the negative electrode active material according to the present invention includes the amphiphilic polymer coating layer on the surface, agglomeration between negative electrode active materials in the aqueous slurry is effectively suppressed to improve the dispersibility.

In an exemplary embodiment of the present invention, the amphiphilic polymer-containing coating layer may be provided on at least a portion on the carbon layer, or may be provided on at least a portion of a region of the surface of the silicon-based particle, in which the carbon layer is not provided.

The amphiphilic polymer-containing coating layer may be partially coated on a surface of the silicon-based particle or carbon layer, or may be coated on the entire surface. A shape of the amphiphilic polymer-containing coating layer may be an island type or a thin film type, and specifically, may be provided in an island type.

In the present invention, a content of the amphiphilic polymer on the surface of the negative electrode active material may be analyzed through a combustion analyzer. Specifically, a carbon content may be analyzed by burning about 0.5 g of a sample under an oxygen gas with a purity of 99.95% by using a G4 ICARUS HF available from Bruker.

In an exemplary embodiment of the present invention, the amphiphilic polymer-containing coating layer may be included in an amount of 0.005 part by weight to 20 parts by weight on the basis of a total of 100 parts by weight of the negative electrode active material. Specifically, the amphiphilic polymer-containing coating layer may be included in an amount of 0.01 part by weight to 10 parts by weight, 0.05 part by weight to 5 parts by weight, 0.1 part by weight to 5 parts by weight, or 0.5 part by weight to 5 parts by weight. The upper limit of the content of the coating layer may be 20 parts by weight, 15 parts by weight, 10 parts by weight, 7 parts by weight, 5 parts by weight, 4.5 parts by weight, 4 parts by weight, 3 parts by weight, 2 parts by weight, or 1 part by weight, and the lower limit of the content of the coating layer may be 0.005 part by weight, 0.01 part by weight, 0.05 part by weight, 0.1 part by weight, 0.3 part by weight, 0.5 part by weight, 0.6 part by weight, or 0.7 part by weight.

When the amphiphilic polymer is introduced within the above range, the water resistance and dispersibility of the negative electrode active material can be effectively improved. On the other hand, if the amphiphilic polymer is included below the above range, sufficient water resistance and dispersibility cannot be secured due to the low contents of the hydrophilic and hydrophobic groups, and if the amphiphilic polymer is included above the above range, the dispersibility and passivation effect are reduced because the coating layer is not evenly distributed, and the capacity and efficiency of the negative electrode active material are reduced because the amphiphilic coating layer does not participate in the electrochemical reaction.

In an exemplary embodiment of the present invention, a weight ratio of the amphiphilic polymer-containing coating layer and the carbon layer may be 1:99 to 70:30, and specifically 5:95 to 60:40 or 10:90 to 50:50.

In an exemplary embodiment of the present invention, a lithium by-product may be present on the silicon-based particle. Specifically, the lithium by-product may be present on the surface of the silicon-based particle or on the surface of the carbon layer. In addition, the lithium by-product may be present between the amphiphilic polymer-containing coating layer and the silicon-based particle.

Specifically, the lithium by-product may refer to a lithium compound remaining near the surface of the silicon-based particle or the carbon layer after the silicon-based particle is manufactured. As described above, even after the acid treatment process, lithium by-products unreacted with the acid may remain.

The lithium by-product may include one or more selected from the group consisting of $Li_2O$, LiOH and $Li_2CO_3$.

Whether or not the lithium by-product exists can be confirmed through X-ray diffraction analysis (XRD) or X-ray photoelectron analysis (XPS).

The lithium by-product may be included in an amount of 5 parts by weight or less on the basis of on 100 parts by weight of the total of the negative electrode active material. Specifically, the lithium by-product may be included in an amount of 0.001 part by weight to 5 parts by weight, 0.01 part by weight to 5 parts by weight, 0.05 part by weight to 2 parts by weight, or 0.1 part by weight to 1 part by weight. More specifically, the lithium by-product may be included in an amount of 0.1 part by weight to 0.8 part by weight or 0.1 part by weight to 0.5 part by weight. When the content of the lithium by-product satisfies the above range, the side reaction in the slurry can be reduced and the change in viscosity can be reduced, thereby improving the aqueous processability characteristics. On the other hand, when the content of the lithium by-product is higher than the above range, the slurry becomes basic when formed, which causes a side reaction or a change in viscosity and problems in the aqueous processability.

The content of the lithium by-product can be calculated by measuring an amount of a HCl solution in a specific section where pH changes in a process of titrating an aqueous solution including the negative electrode active material with the HCl solution using a titrator, and then calculating an amount of the lithium by-product.

An average particle diameter (D50) of the negative electrode active material may be 0.1 $\mu$m to 30 $\mu$m, specifically 1 $\mu$m to 20 $\mu$m, and more specifically 1 $\mu$m to 10 $\mu$m. When the above range is satisfied, the structural stability of the active material is ensured during charging and discharging, a problem that a level of volume expansion/contraction increases as the particle diameter becomes excessively large can be prevented, and a problem that the initial efficiency is reduced as the particle diameter becomes excessively small can also be prevented.

### <Method for Manufacturing Negative Electrode Active Material>

An exemplary embodiment of the present invention provides a method for manufacturing a negative electrode active material, the method including: forming a silicon-based particle including SiOx (0<x<2) and a Li compound and having a carbon layer provided on at least a portion of a surface thereof; and reacting the silicon-based particle with an amphiphilic polymer precursor.

The silicon-based particle may be formed through a step of heating and vaporizing Si powder and $SiO_2$ powder under vacuum, a step of depositing the vaporized mixed gas to form a preliminary particle; a step of forming a carbon layer on a surface of the formed preliminary particle, and a step of mixing and heat-treating the preliminary particle having the carbon layer formed thereon and Li powder. Specifically, a mixed powder of the Si powder and the $SiO_2$ powders may be heat-treated under vacuum at 1300°C to 1800°C, 1400°C to 1800°C, or 1400°C to 1600°C.

The formed preliminary particle may have a form of SiO.

The carbon layer may be formed by using chemical vapor deposition (CVD) using hydrocarbon gas or by carbonizing a material serving as a carbon source.

Specifically, the carbon layer may be formed by putting the formed preliminary particle into a reactor, and then depositing hydrocarbon gas at 600°C to 1200°C by chemical vapor deposition (CVD). The hydrocarbon gas may be at least one hydrocarbon gas selected from the group consisting of methane, ethane, propane and acetylene, and may be heat-treated at 900°C to 1000°C.

The step of mixing the preliminary particle formed with the carbon layer and Li powder and performing heat treatment may be performed at 700°C to 900°C for 4 hours to 6 hours, and specifically at 800°C for 5 hours.

The silicon-based particle may include, as the Li compound described above, a Li silicate, a Li silicide, a Li oxide, or the like.

The particle size of the silicon-based particle may be adjusted through a method such as a ball mill, a jet mill, or air classification, but the present invention is not limited thereto.

A lithium compound (lithium by-product) is provided on at least a portion of the surface of the silicon-based particle having the carbon layer as described above. Specifically, in the processes of forming a preliminary particle including the SiOx (0<x<2), forming a carbon layer on the preliminary particle, and then doping Li to manufacture the silicon-based particle described above, a lithium compound, i.e., a lithium by-product formed due to unreacted lithium remains near the surface of the silicon-based particle.

In an exemplary embodiment of the present invention, the method for manufacturing a negative electrode active material includes reacting the silicon-based particle with the amphiphilic polymer precursor to coat at least a portion on the silicon-based particle with the amphiphilic polymer.

The amphiphilic polymer precursor may be a precursor that can form the aforementioned PEG-PPO, PEG-PS, PS-PBA, polylysine-PPO, or polylysine-PS. In one example, polystyrene-block-polyethylene oxide (PS-b-PEO) or polystyrene-b-poly(butyl acrylate) (PS-b-PBA) may be used as the amphiphilic polymer precursor.

The step of reacting the silicon-based particle with the amphiphilic polymer precursor may include activating the surface of the silicon-based particle; and mixing the silicon-based particle and the amphiphilic polymer in a solvent.

The activation step may be specifically performed by exposing the silicon-based particle to ultraviolet rays. By activating the surface of the silicon-based particle, the amphiphilic polymer can be easily coated on the silicon-based particle.

A weight ratio of the silicone-based particle and the amphiphilic polymer may be 99.9:0.1 to 80:20. Specifically, the weight ratio may be 99.5:0.5 to 85:15 or 99:1 to 90:10. By reacting the silicon-based particle and the amphiphilic polymer within the range described above, the water resistance and dispersibility of the negative electrode active material can be effectively improved. On the other hand, if the amphiphilic polymer is excessively included, the dispersibility and passivation effect are reduced because the coating layer is not evenly distributed, and the capacity and efficiency of the negative electrode active material are reduced because the amphiphilic coating layer does not participate in the electrochemical reaction.

The silicon-based particle and the amphiphilic polymer may be mixed in a solvent, which may be then stirred to provide the amphiphilic polymer on the surface of the silicon-based particle.

The solvent may be preferably dimethyl sulfoxide (DMSO), but is not limited thereto, and a solvent used in the present technical field may be appropriately adopted.

The stirring can be performed for 30 minutes to 6 hours, and preferably 1 hour to 5 hours or 2 hours to 4 hours.

The negative electrode active material including the amphiphilic polymer introduced by the aforementioned method can improve the aqueous processability of the slurry and improve the dispersibility of the negative electrode active material in the slurry, thereby making it possible to stably form a negative electrode. Accordingly, a negative electrode including a negative electrode active material according to the present invention and a secondary battery including the negative electrode may have improved discharge capacity, initial efficiency, resistance performance, and/or life characteristics of a battery.

## <Negative Electrode>

A negative electrode according to an exemplary embodiment of the present invention may include the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder a thickener and/or a conductive material.

The negative electrode active material layer may be formed by applying a negative electrode slurry including a negative electrode active material, a binder, a thickener, and/or a conductive material to at least one surface of a current collector, and drying and roll-pressing the same.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic compound capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as $SiO_\beta(0<\beta<2)$, $SnO_2$, vanadium oxide, lithium titanium oxide, and lithium vanadium oxide; or a composite including the metallic compound and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, mesocarbon microbeads, mesophase pitches, and high-temperature fired carbon such as petroleum- or coal tar pitch-derived cokes.

The additional negative electrode active material may be a carbon-based negative electrode active material.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

The negative electrode slurry including the negative electrode active material according to an exemplary embodiment of the present invention may have pH of 7 to 11 at 25°C. When pH of the negative electrode slurry satisfies the above range, the rheological properties of the slurry are stabilized. On the other hand, when pH of the negative electrode slurry is less than 7 or pH of the negative electrode slurry exceeds 11, carboxymethylcellulose (CMC) used as a thickener is decomposed, resulting in lowering in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 $\mu$m to 20 $\mu$m. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, a weight ratio of the negative electrode active material and the additional negative electrode active material included in the negative electrode slurry may be 1:99 to 30:70, and specifically 5:95 to 30:70 or 10:90 to 20:80.

In an exemplary embodiment of the present invention, the entire negative electrode active materials included in the negative electrode slurry may be included in an amount of 60 parts by weight to 99 parts by weight, and specifically 70 parts by weight to 98 parts by weight on the basis of 100 parts by weight of a total of solid content of the negative electrode slurry.

In an exemplary embodiment of the present invention, the binder may be included in an amount of 0.5 part by weight to 30 parts by weight, and specifically 1 part by weight to 20 parts by weight, on the basis of 100 parts by weight of the total of the solid content of the negative electrode slurry.

In an exemplary embodiment of the present invention, the conductive material may be included in an amount of 0.5 part by weight to 25 parts by weight, specifically 1 part by weight to 20 parts by weight on the basis of 100 parts by weight of the total of the solid content of the negative electrode slurry.

In an exemplary embodiment of the present invention, the thickener may be included in an amount of 0.5 part by weight to 25 parts by weight, specifically 0.5 part by weight to 20 parts by weight, and more specifically 1 part by weight to 20 parts by weight on the basis of 100 parts by weight of the total of the solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a solid content of the negative electrode slurry may be 20 parts by weight to 75 parts by weight, and specifically 30 parts by weight to 70 parts by weight on the basis of 100 parts by weight of the total of the negative electrode slurry.

**<Secondary Battery>**

A secondary battery according to an exemplary embodiment of the present invention may include the negative electrode according to an exemplary embodiment of the present invention described above. Specifically, the secondary battery may include a negative electrode, a positive electrode, a separator interposed between the positive electrode and the negative electrode, and an electrolyte solution, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 $\mu$m to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution with high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

Another exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

### <Examples and Comparative Examples>

### Example 1

94g of powders of Si and $SiO_2$ mixed in a molar ratio of 1:1 were mixed in a reactor and vacuum-heated to a sublimation temperature of 1,400°C. Then, a mixed gas of vaporized Si and $SiO_2$ was reacted in a cooling zone in a vacuum state where a cooling temperature was 800°C, and condensed into a solid phase. Then, the condensed particles were pulverized using a ball mill for 3 hours to manufacture silicon-based particles having a size of 6 $\mu$m. Thereafter, the silicon-based particles were positioned in a hot zone of a CVD apparatus while maintaining an inert atmosphere by causing Ar gas to flow, and a reaction was carried out at $10^{-1}$ torr for 20 minutes while blowing methane into a hot zone of 900°C using Ar as carrier gas, thereby forming a carbon layer on the surface of the silicon-based particles. Then, 6 g of Li metal powder was added, additional heat treatment was performed at a temperature of 800°C in an inert atmosphere, and the particle surface was activated by exposing the same to ultraviolet rays. Next, polyethylene glycol-block-polystyrene (PEG-b-PS) and silicon-based particles were mixed at a weight ratio of 1:99 in a dimethylsulfoxide (DMSO) solvent, and the mixture was subjected to a reaction at room temperature for 2 hours under stirring, whereby a negative electrode active material formed with a polymer coating layer was prepared.

## Example 2

A negative electrode active material was prepared in the same manner as in Example 1, except that PEG-b-PS was changed to PS-b-PBA.

## Example 3

A negative electrode active material was prepared in the same manner as in Example 1, except that the weight ratio of PEG-b-PS: silicon-based particles was changed to 10:90.

## Comparative Example 1

A negative electrode active material was prepared in the same manner as in Example 1, except that the process of forming a polymer coating layer was not performed.

## Comparative Example 2

A negative electrode active material was prepared in the same manner as in Example 1, except that the solvent in Example 1 was changed to water, PEG-b-PS was changed to hexamethyldisilazane (HMDS), and heat was applied to introduce a trimethylsilyl group onto the surface.

<Content analysis of carbon layer>

The content of the carbon layer was analyzed using CS-analyzer (CS-800, ELTRA).

<Analysis of Li content included in negative electrode active material>

The Li atom content was confirmed by ICP analysis using an inductively coupled plasma atomic emission spectrometer (ICP-OES, AVIO 500, Perkin-Elmer 7300).

<Content analysis of amphiphilic polymer>

The content of the amphiphilic polymer was confirmed by carbon content analysis using a combustion analyzer (G4 ICARUS HF from Bruker).

<Analysis of $D_{50}$ and specific surface area of negative electrode active material>

$D_{50}$ of the negative electrode active material was analyzed by laser diffraction particle size analysis using a Microtrac S3500 instrument, and the BET specific surface area of the negative electrode active material was measured using a BET measuring instrument (BEL-SORP-MAX, Nippon Bell).

The analysis results of the negative electrode active materials manufactured in the Examples and Comparative Examples described above are shown in Table 1 below.

[Table 1]

| | Based on total of 100 parts by weight of negative electrode active material | | | Amphiphilic polymer | | $D_{50}$ of negative electrode active material (um) | Specific surface area of negative electrode active material ($m^2/g$) |
|---|---|---|---|---|---|---|---|
| | Li (part by weight) | carbon layer (part by weight ) | Outermost coating layer Content (part by weight) | Hydrophilic group ratio (%) | Hydrophobic group ratio (%) | | |
| Example 1 | 6.6 | 6.1 | 0.8 | 50 | 50 | 5.2 | 2.8 |
| Example 2 | 6.4 | 5.9 | 0.7 | 50 | 50 | 5.0 | 2.7 |

(continued)

| | Based on total of 100 parts by weight of negative electrode active material | | | Amphiphilic polymer | | $D_{50}$ of negative electrode active material (um) | Specific surface area of negative electrode active material ($m^2$/g) |
|---|---|---|---|---|---|---|---|
| | Li (part by weight) | carbon layer (part by weight ) | Outermost coating layer Content (part by weight) | Hydrop hilic group ratio (%) | Hydrop hobic group ratio (%) | | |
| Example 3 | 6.1 | 9.7 | 3.8 | 50 | 50 | 5.1 | 2.7 |
| Comparative Example 1 | 6.8 | 5.3 | 0.0 | - | - | 5.0 | 2.8 |
| Comparative Example 2 | 6.3 | 6.2 | 1.2 | - | - | 4.9 | 2.6 |

**<Experimental Example: Evaluation of discharge capacity, initial efficiency, and life (capacity retention rate) characteristics>**

A negative electrode and a battery were manufactured using the negative electrode active materials of Examples and Comparative Examples, respectively.

A mixture was manufactured by mixing the negative electrode active material, carbon black as a conductive material, and polyacrylic acid (PAA) as a binder in a weight ratio of 80:10:10. Thereafter, 7.8 g of distilled water was added to 5 g of the mixture, which was then stirred to manufacture a negative electrode slurry. The negative electrode slurry was applied to a copper (Cu) metal thin film as a negative electrode current collector having a thickness of 20 $\mu$m, and dried. In this case, the temperature of the circulating air was 60°C. Then, the thin film was roll-pressed and dried 130°C for 12 hours in a vacuum oven to prepare a negative electrode.

A lithium (Li) metal thin film obtained by cutting a lithium foil into a circular shape of 1.7671 $cm^2$ was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving $LiPF_6$ to a concentration of 1M was injected to manufacture a lithium coin half-cell.

The prepared batteries were charged and discharged to evaluate discharge capacity, initial efficiency, and capacity retention rate, which are shown in Table 2 below.

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).

Charging conditions: CC (constant current)/CV (constant voltage) (5mV/0.005C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (one time discharge capacity/one time charge capacity)$\times$100

The capacity retention rate was derived by the following calculation.

Capacity retention rate (%) = (49 times discharge capacity/one time discharge capacity)$\times$100

**<Experimental Example: Slurry dispersibility evaluation>**

The negative electrode active material prepared in each of Examples 1 to 3 and Comparative Examples 1 and 2 and distilled water were mixed at a weight ratio of 20:80, sonicated for 5 minutes, allowed to stand for 10 minutes, and then passed through a mesh having a diameter of a size corresponding to $D_{max}$ of each negative electrode active material. The active material remaining on the mesh was dried in an oven at 80°C for not less than half a day, and then the weight thereof was measured.

The dispersibility was calculated as follows.

$$\text{dispersibility}(\%) = \frac{Wt - Wr}{Wt} \times 100$$

$W_t$ refers to a total weight of the negative electrode active material included in the mixture, and $W_r$ refers to a weight of the negative electrode active material that did not pass through the mesh when the mixture has been passed through the mesh.

**<Experimental Example: Evaluation of processability (gas generation) characteristics>**

As part of the processability evaluation, 20 g of the slurry manufactured by mixing graphite, the negative electrode active material, carbon black, CMC and PAA in a weight ratio of 77:20:1:1:1 was put into a pouch of about 10cm*15cm, which was then vacuum sealed, put into an oven at 40°C, and subjected to measurement for volume change.

The gas generation time point (hour) was measured based on the time point at which the volume of the pouch increased by 2 mL or more, as compared with the volume measured immediately after vacuum sealing the pouch. The result is shown in Table 2 below.

[Table 2]

| Battery | Aqueous dispersibility (%) | Gas generation time point (hour) | Discharge capacity (mAh/g) | Initial efficiency (%) | Capacity retention rate (%) |
|---|---|---|---|---|---|
| Example 1 | 88 | 78 | 1431 | 87 | 93 |
| Example 2 | 82 | 41 | 1422 | 87 | 91 |
| Example 3 | 73 | 66 | 1376 | 85 | 90 |
| Comparative Example 1 | 68 | 16 | 1428 | 87 | 70 |
| Comparative Example 2 | 55 | 50 | 1418 | 86 | 66 |

The negative electrode active material according to the present invention is characterized in that the amphiphilic polymer-containing coating layer is provided on the silicon-based particle including the Li compound. Since the hydrophobic group of the amphiphilic polymer has low reactivity with water, the inorganic layer does not react with water in the aqueous slurry and is well maintained, thereby preventing water from penetrating into the negative electrode active material to effectively passivate the silicon-based particle. In addition, since a side reaction between the silicon-based particle or a lithium by-product and water is prevented to suppress gas generation, there is an effect of improving the aqueous processability of the slurry. At the same time, there is an effect of improving the dispersibility of the negative electrode active material in the aqueous slurry because the hydrophilic group included in the amphiphilic polymer is located on the surface of the negative electrode active material.

On the other hand, it could be confirmed that when the polymer coating layer was not formed, as in Comparative Example 1, it was difficult to form a stable electrode due to low aqueous dispersibility, and the gas generation time point of the negative electrode slurry was advanced due to a side reaction between the lithium by-product and water, which deteriorated the slurry processability and significantly lowered the capacity retention rate of the secondary battery using the negative electrode active material.

In Comparative Example 2 where the trimethylsilyl group was introduced in order to impart hydrophobicity to the surface of the negative electrode active material, instead of the polymer coating layer, it could be confirmed that although the gas generation time point of the negative electrode slurry was delayed to some extent, the hydrophilicity of the negative electrode active material was still lowered and the aqueous dispersibility was somewhat low, and that the capacity retention rate of the secondary battery using the negative electrode active material was significantly reduced.

**Claims**

1. A negative electrode active material comprising:

    a silicon-based particle comprising SiOx (0<x<2) and a Li compound and having a carbon layer provided on at least a portion of a surface thereof; and

an amphiphilic polymer-containing coating layer provided on at least a portion on the silicon-based particle.

2. The negative electrode active material of claim 1, wherein the amphiphilic polymer comprises a unit comprising a hydrophilic group and a unit comprising a hydrophobic group.

3. The negative electrode active material of claim 2, wherein the unit comprising the hydrophilic group is a unit derived from one or more selected from the group consisting of polyethylene glycol, polylysine, and poly[oligo(ethylene glycol) methyl ether methacrylate].

4. The negative electrode active material of claim 2, wherein the unit comprising the hydrophobic group is a unit derived from one or more selected from the group consisting of polystyrene and polypropylene oxide.

5. The negative electrode active material of claim 2, wherein a weight ratio of the unit comprising the hydrophilic group and the unit comprising the hydrophobic group is 3:7 to 7:3.

6. The negative electrode active material of claim 1, wherein the amphiphilic polymer-containing coating layer is included in an amount of 0.005 part by weight to 20 parts by weight on the basis of a total of 100 parts by weight of the negative electrode active material.

7. The negative electrode active material of claim 1, wherein the amphiphilic polymer comprises one or more selected from the group consisting of PEG-PPO, PEG-PS, PS-PBA, polylysine-PPO, and polylysine-PS.

8. The negative electrode active material of claim 1, wherein the negative electrode active material has a dispersibility of 70% or higher according to Equation 1 below, when a mixture of 20 g of the negative electrode active material and 80 g of distilled water is sonicated and is then passed through a mesh having a diameter of a size corresponding to $D_{max}$ of the negative electrode active material.

[Equation 1]

$$\text{dispersibility}(\%) = \frac{Wt - Wr}{Wt} \times 100$$

in Equation 1, $W_t$ refers to a total weight of the negative electrode active material included in the mixture, and $W_r$ refers to a weight of the negative electrode active material that did not pass through the mesh when the mixture has been passed through the mesh.

9. The negative electrode active material of claim 1, further comprising a lithium by-product provided on at least a portion on the silicon-based particle.

10. The negative electrode active material of claim 9, wherein the lithium by-product is included in an amount of 5 parts by weight or less on the basis of a total of 100 parts by weight of the negative electrode active material.

11. The negative electrode active material of claim 1, wherein Li is included in an amount of 0.1 part by weight to 40 parts by weight on the basis of a total of 100 parts by weight of the negative electrode active material.

12. The negative electrode active material of claim 1, wherein the carbon layer is included in an amount of 0.1 part by weight to 50 parts by weight on the basis of 100 parts by weight of a total of the negative electrode active material.

13. A method for manufacturing the negative electrode active material of any one of claims 1 to 12, the method comprising:

forming a silicon-based particle comprising SiOx (0<x<2) and a Li compound and having a carbon layer provided on at least a portion of a surface thereof; and
reacting the silicon-based particle with an amphiphilic polymer precursor.

14. A negative electrode comprising the negative electrode active material of any one of claims 1 to 12.

15. A secondary battery comprising the negative electrode of claim 14.

| INTERNATIONAL SEARCH REPORT | | International application No. |
|---|---|---|
| | | **PCT/KR2023/016304** |

**A. CLASSIFICATION OF SUBJECT MATTER**

**H01M 4/36**(2006.01)i; **H01M 4/48**(2010.01)i; **H01M 4/134**(2010.01)i; **H01M 10/052**(2010.01)i; **C01B 33/113**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01B 32/21(2017.01); C01B 33/00(2006.01); H01M 10/04(2006.01); H01M 10/0525(2010.01); H01M 4/13(2010.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 음극(anode), 음극 활물질(anode active material), 실리콘산화물(silicon oxide, SiOx), 리튬 화합물(Li compound), 탄소층(carbon layer), 양친성 고분자(amphiphilic polymer), 코팅층(coating layer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0132278 A (LG CHEM, LTD.) 12 December 2018 (2018-12-12)<br>See claims 1, 8-11, 13 and 16-17; and paragraphs [0018] and [0085]-[0086]. | 1-15 |
| Y | KR 10-1818813 B1 (LG CHEM, LTD.) 15 January 2018 (2018-01-15)<br>See claims 1 and 12-13; and paragraphs [0075]-[0077]. | 1-15 |
| Y | KR 10-2016-0051054 A (LG CHEM, LTD.) 11 May 2016 (2016-05-11)<br>See claims 1-3; and paragraph [0024]. | 6,8 |
| Y | JP 2014-532267 A (LG CHEMICAL LTD.) 04 December 2014 (2014-12-04)<br>See claims 1 and 10; and paragraph [0040]. | 9-10 |
| A | KR 10-2178900 B1 (CHUNGBUK NATIONAL UNIVERSITY INDUSTRY-ACADEMIC COOPERATION FOUNDATION) 13 November 2020 (2020-11-13)<br>See entire document. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
| --- |
| **PCT/KR2023/016304** |

| Patent document cited in search report | | | Publication date (day/month/year) | Patent family member(s) | | | Publication date (day/month/year) |
| --- | --- | --- | --- | --- | --- | --- | --- |
| KR | 10-2018-0132278 | A | 12 December 2018 | CN | 110679017 | A | 10 January 2020 |
| | | | | CN | 110679017 | B | 01 July 2022 |
| | | | | EP | 3618150 | A1 | 04 March 2020 |
| | | | | EP | 3618150 | A4 | 15 April 2020 |
| | | | | EP | 3618150 | B1 | 18 August 2021 |
| | | | | KR | 10-2227309 | B1 | 15 March 2021 |
| | | | | US | 2020-0099052 | A1 | 26 March 2020 |
| | | | | WO | 2018-221827 | A1 | 06 December 2018 |
| KR | 10-1818813 | B1 | 15 January 2018 | KR | 10-2016-0033638 | A | 28 March 2016 |
| KR | 10-2016-0051054 | A | 11 May 2016 | KR | 10-1773656 | B1 | 12 September 2017 |
| | | | | US | 10424788 | B2 | 24 September 2019 |
| | | | | US | 2018-0301702 | A1 | 18 October 2018 |
| | | | | WO | 2016-068516 | A1 | 06 May 2016 |
| JP | 2014-532267 | A | 04 December 2014 | CN | 103891014 | A | 25 June 2014 |
| | | | | CN | 103891014 | B | 15 February 2017 |
| | | | | CN | 104316822 | A | 28 January 2015 |
| | | | | CN | 104316822 | B | 13 June 2017 |
| | | | | EP | 2772969 | A1 | 03 September 2014 |
| | | | | EP | 2772969 | A4 | 08 April 2015 |
| | | | | JP | 5977831 | B2 | 24 August 2016 |
| | | | | KR | 10-1437074 | B1 | 02 September 2014 |
| | | | | KR | 10-2013-0045212 | A | 03 May 2013 |
| | | | | US | 2014-0170485 | A1 | 19 June 2014 |
| | | | | US | 9315882 | B2 | 19 April 2016 |
| | | | | WO | 2013-062313 | A1 | 02 May 2013 |
| KR | 10-2178900 | B1 | 13 November 2020 | KR | 10-2020-0058972 | A | 28 May 2020 |

Form PCT/ISA/210 (patent family annex) (July 2022)

**EP 4 513 591 A1**

**Patent documents cited in the description**

- KR 1020220172768

- KR 100794192